# EUROPEAN PATENT APPLICATION

(11) **EP 1 185 070 A1**
(43) Date of publication of application: **06.03.2002**
(21) Application number: 01917800.3
(22) Date of filing: 03.04.2001
(51) Int. Cl.: H04M 11/00, H04N 1/32, H04N 1/00, H04L 12/02

(54) **ADAPTER AND METHOD OF CIRCUIT CONNECTION**

(30) Priority: 05.04.2000 JP 2000103200
(71) Applicant: MITSUBISHI DENKI KABUSHIKI KAISHA, Tokyo 100-8310 (JP)
(72) Inventor: ISHIKAWA, Hiroaki, Mitsubishi Denki Kabushiki K., Chiyoda-ku, Tokyo 100-8310 (JP)
(74) Representative: Pfenning, Meinig & Partner
(86) International application number: JP0102881
(87) International publication number: WO0178366

(57) **Abstract**

A simultaneous use of a telephone terminal and a fax terminal which are connected with an adapter that is connected to two communication lines is allowed.

An adapter 20 is connected with a telephone terminal and a fax terminal, and also connected to a public line and an IP network. The adapter 20 is characterized with a selector provided for coupling either one of a public line I/F 3 and an IP network I/F 4 and either one of a telephone terminal I/F 5 and a fax terminal I/F 6.

## Description

### Technical Field

The present invention relates to an internet fax/telephone adapter which is characterized with such an automatic changing function that allows a general telephone terminal to transmit/receive a call by way of a general public line during a fax transmission/reception being carried out over an IP (internet protocol) network. Similarly, the automatic changing function allows a fax (facsimile) to be transmitted/received by way of the general public line during a call being carried out over the IP network.

### Background Art

Fig. 16 shows an example of an internet fax/telephone adapter. Fig. 16 is an overall view illustrating a system configuration of a conventional adapter 20p.
With referring to Fig. 16, a reference numeral 1 denotes a CPU and a reference numeral 2 denotes a memory, which stores such as an operating system and programs. Telephone numbers (phone numbers) which are registered in the memory 2 are callable via a LAN (Local Area Network). A reference numeral 3 denotes an internet protocol network I/F (Inter Face), which connects an internet protocol network (hereinafter referred to as "IP network") to the adapter 20p. A reference numeral 5p denotes a telephone/FAX terminal I/F, which connects a general telephone terminal or a general FAX terminal with the adapter 20p. A reference numeral 4 is a public line I/F, which connects a general public line to the adapter 20p.

A reference numeral 7 denotes a LAN controller, which controls the input/output of data over the IP network via the IP network I/F 3. A reference numeral 8 denotes an analog I/F, which supplies power to the telephone terminal connected with the telephone terminal I/F 4, generates a RING, establishes a call by the telephone terminal, monitors a reply to a reception, and the like. A reference numeral 10 denotes a codec, which is provided with an A/D converter for converting an analog voice signal from the analog I/F 8 into a digital signal and a D/A converter for converting digital data into analog data to be outputted to the analog I/F 8. A reference numeral 12 denotes a DSP, which performs signal processing such as modulation and demodulation for voice signal digital data inputted/outputted through the codec 10. A reference numeral 13p denotes a selector, which couples the telephone/FAX terminal I/F 5p and either the analog I/F 8 or the public line I/F 4.

Now, the operation will be described.

The selector 13p in the wait state normally couples the telephone/FAX terminal I/F 5p and the public line I/F 4. In the case of the telephone terminal, which is connected with the telephone terminal I/F 4, setting up and carrying out a call, a telephone number called by the telephone terminal is compared in the first place with telephone numbers registered in advance in the memory 2.
As a result of comparing, if the called telephone number matches none of the registered telephone numbers in the memory 2, then the call is set up and carried out by way of the public line, as the telephone terminal is coupled to the public line by the selector 13p. Thus, the call may be implemented by way of the public line.

Now, if the called telephone number is callable via a LAN, and in other words, if the called telephone number matches a registered telephone number in the memory 2, the selector 13p is operated so as to couple the telephone terminal I/F 4 and the analog I/F 8 in the first place.

Thereafter, in order to implement the call over the IP network connected to the IP network I/F 3, the LAN controller 7 is controlled to establish a communication.

The memory 2 stores IP addresses corresponding to telephone numbers. A communication is established with another adapter 20p provided at the IP address of the other party.

Hereafter, a call request is sent from the adapter 20p to the other party's adapter.

Upon reception of the call request, the other party's adapter detects an on-hook state of a telephone terminal connected with the telephone terminal I/F 4 of the other party's adapter, and confirms that the telephone terminal is not engaged. Then, the other party's adapter controls the analog I/F 8 to send a RING to the telephone terminal so as to call the telephone terminal.

The other party's adapter, when detecting upon reception of an on-hook signal that the receiver of the other party's telephone terminal has been picked up, notifies the source adapter of the call enable state. Thus, the call enable state is established.

Thereafter, a voice signal from the telephone terminal connected with the adapter 20p is subject to two-line/four-line conversion in the analog I/F 8, digitized in the codec 10, processed through signal processing such as compression in the DSP 12, and then transmitted to the other party's adapter over the IP network from the LAN controller 7.

At the other party's adapter, the digital data is demodulated to analog voice in reverse fashion to that described above. Thus, the voice may be generated through the telephone terminal.

Furthermore, the transmission and the reception of voice are processed one by one so as to implement a two-way communication.

A voice call by a telephone terminal may thus be implemented. A fax transmission/reception by way of the public line or over the IP network may also be implemented through the same procedure as that discussed above.

The thus configured conventional device is not allowed to communicate by way of a public line and over an IP network at the same time, although the public line is available during a call or a fax transmission/reception being carried out over the IP network, and similarly, although the IP network is available during a call or a fax transmission/reception being carried out by way of the public line. This has posed a problem. Thus, the conventional device fails to use communication lines in an effective manner.

A possible solution to that problem by the use of the conventional device would be to connect the conventional device with the telephone terminal and to the IP network on one hand, and connect with the FAX terminal and to the public line on the other, for example. However, this connection fails to allow a telephone call to be carried out by way of the public line and a fax to be transmitted/received over the IP network. Otherwise, a manual operation is needed for changing the connection, which poses another problem and is inconvenient for the user.

Furthermore, a possible solution to this problem caused by the previous problem above also by the use of the conventional device would be to use two units of the conventional devices, one to be connected with the telephone terminal and the other with the FAX terminal. Then, the IP network and the public line are to be connected simultaneously with both of the two units. This solution, however, using two units of the adapters, would invite an increase in the cost and would cause another problem.

The present invention is directed to solving those problems mentioned above. It is an object of the present invention to obtain an internet fax/telephone adapter, which may be connected with a single line of a general telephone terminal or a single line of a general FAX terminal, and may implement a voice call or a fax transmission/reception by way of a public line or over an IP network. In addition to that, the internet fax/telephone adapter may allow a fax transmission/reception by way of a public line at the same time when a voice call is being carried out by a telephone terminal over an IP network. Similarly, a voice call may be allowed by way of the public line at the same time when a fax transmission/reception is being carried out by the FAX terminal over the IP network.

### Disclosure of the Invention

An adapter according to this invention is an adapter which is connected to a telephone terminal for transmitting/receiving voice data and a fax terminal for transmitting/receiving image data.

Then, the adapter is characterized by including,
a first communication line interface which connects with a first communication line designed for a communication based upon a telephone number,
a second communication line interface which connects with a second communication line designed for a communication based upon an identifier, which indicates a communication network address, for identifying a destination,
a telephone terminal interface which connects with the telephone terminal,
a fax terminal interface which connects with the fax terminal,
a selector which couples one of the first communication line interface and the second communication line interface and one of the telephone terminal interface and the fax terminal interface, and
a controller for controlling the selector.

The adapter is characterized by receiving the telephone number specifying a destination inputted from one of the telephone terminal and the fax terminal.

Then, the controller is characterized by selecting, based upon the telephone number inputted, one of the first communication line interface and the second communication line interface as a communication request line interface.

Then, the selector is characterized by selecting the telephone terminal interface as a communication request terminal interface in the case where the telephone number is inputted by the telephone terminal, and selecting the fax terminal interface as the communication request terminal interface in the case where the telephone number is inputted by the fax terminal, and then coupling the communication request terminal interface selected and the communication request line interface selected by the controller.

The adapter is characterized by further having a memory for storing telephone number information including the telephone number and an identifier corresponding to the telephone number.

Then, the controller is characterized by searching through the telephone number information stored in the memory by using the telephone number inputted, and then selecting the second communication line interface as the communication request line interface if detecting a piece of the telephone number information including a telephone number which matches the telephone number inputted, and selecting the first. communication line interface as the communication request line interface if detecting no piece of the telephone number information including the telephone number which matches the telephone number inputted.

The adapter is characterized by receiving a communication request signal requesting a communication with one of the telephone terminal and the fax terminal by way of one of the first communication line interface and the second communication line interface, and defining one of the first communication line interface and the second communication line interface which has received the communication request signal as a communication request line interface.

Then, the communication request line interface is characterized by selecting, based upon the communication request signal received, one of the telephone terminal interface and the fax terminal interface as a communication request terminal interface.

Then, the selector is characterized by coupling the communication request terminal interface selected and the communication request line interface.

The second communication line interface is characterized by transmitting a reply indicating that the telephone terminal is engaged in communication to a transmitting source of the communication request signal, in the case of receiving the communication request signal requesting a communication with the telephone terminal while the first communication line interface and the telephone terminal interface are coupled by the selector, and selecting the second commination line interface as the communication request terminal interface and selecting the fax terminal interface as the communication request line interface, in the case of receiving the communication request signal requesting a communication with the fax terminal while the first communication line interface and the telephone terminal interface are coupled by the selector.

Then, the selector is characterized by coupling the communication request terminal interface selected and the communication request line interface selected.

The second communication line interface is characterized by transmitting a reply indicating that the fax terminal is engaged in communication to a transmission source of the communication request signal, in the case of receiving the communication request signal requesting a communication with the fax terminal while the first communication line interface and the fax terminal interface are coupled by the selector, and selecting the second communication line interface as the communication request terminal interface and selecting the telephone terminal interface as the communication request line interface, in the case of receiving the communication request signal requesting a communication with the telephone terminal while the first communication line interface and the fax terminal interface are coupled by the selector.

Then, the selector is characterized by coupling the communication request terminal interface selected and the communication request line interface selected.

The first communication line interface is characterized by transmitting a reply indicating that the telephone terminal is engaged in communication to a transmission source of the communication request signal, in the case of receiving the communication request signal requesting a communication with the telephone terminal while the second communication line interface and the telephone terminal interface are coupled by the selector, and selecting the first commination line interface as the communication request terminal interface and selecting the fax terminal interface as the communication request line interface, in the case of receiving the communication request signal requesting a communication with the fax terminal while the second communication line interface and the telephone terminal interface are coupled by the selector.

Then, the selector is characterized by coupling the selected communication request terminal interface and the communication request line interface selected.

The first communication line interface is characterized by transmitting a reply indicating that the fax terminal is engaged in communication to a transmission source of the communication request signal, in the case of receiving the communication request signal requesting a communication with the fax terminal while the second communication line interface and the fax terminal interface are coupled by the selector, and selecting the first commination line interface as the communication request terminal interface and selecting the telephone terminal interface as the communication request line interface, in the case of receiving the communication request signal requesting a communication with the telephone terminal the second communication line interface and the fax terminal interface are coupled by the selector.
wherein the selector couples the communication request terminal interface selected and the communication request line interface selected.

The adapter is characterized by further including a memory for storing telephone number information including the telephone number and an identifier corresponding to the telephone number.

The controller is characterized by searching through the telephone number information stored in the memory by using a telephone number inputted in the case where the telephone number is inputted to the fax terminal interface by the fax terminal while the first communication line interface and the telephone terminal interface are coupled by the selector, and notifying the fax terminal interface that the telephone terminal is engaged in communication if detecting no piece of the telephone number information including a telephone number which matches the telephone number inputted, and selecting the second communication line interface as the communication request line interface and the fax terminal interface as the communication request terminal interface if detecting a piece of the telephone number information including the telephone number which matches the telephone number inputted.

Then, the selector is characterize by coupling the communication request terminal interface selected and the communication request line interface selected.

The controller is characterized by searching through the telephone number information stored in the memory by using the telephone number inputted in the case that the telephone number is inputted to the telephone terminal interface by the telephone terminal while the first communication line interface and the fax terminal interface are couple by the selector, and notifying the telephone terminal interface that the fax terminal is engaged in commination if detecting no piece of the telephone number information including a telephone number which matches the telephone number inputted, and selecting the second communication line interface as the communication request line interface and the fax terminal interface as the communication request terminal interface if detecting a piece of the telephone number information including the telephone number which matches the telephone number inputted.

Then, selector is characterized by coupling the communication request terminal interface selected and the communication request line interface selected.

The controller is characterized by selecting the first communication line interface as the communication request line interface and the fax terminal interface as the communication request terminal interface in the case that the telephone number is inputted to the fax terminal interface from the fax terminal while the second communication line interface and the telephone terminal interface are coupled by the selector.

Then, selector is characterized by coupling the communication request terminal interface selected and the communication request line interface selected.

The controller is characterized by selecting the first communication line interface as the communication request line interface and the telephone terminal interface as the communication request terminal interface in the case that the telephone number is inputted to the telephone terminal interface by the telephone terminal while the second communication line interface and the fax terminal interface are coupled by the selector.

Then, the selector is characterized by coupling the communication request terminal interface selected and the communication request line interface selected.

The first communication line interface is characterized by being connected to a public line as the first communication line.

Then, the second communication line interface is being connected to an internet protocol network as the second communication line.

A line coupling method according to this invention couples one of a telephone terminal for transmitting/receiving voice data and a fax terminal for transmitting/receiving image data and one of a first communication line designed for a communication based upon a telephone number and a second communication line designed for a communication based upon an identifier which indicates a communication network address for identifying a destination.

Then, the line coupling method is characterized by coupling one of the first communication line and the second communication line and one of the telephone terminal and the fax terminal.

The line coupling method is characterized by:
receiving the telephone number specifying a destination by one of the telephone terminal and the fax terminal,
selecting one of the first communication line and the second communication line as a communication request line based upon the telephone number inputted,
coupling the telephone terminal and the communication request line when the telephone number is inputted by the telephone terminal, and
coupling the fax terminal and the communication request line when the telephone number is inputted by the fax terminal.

The line coupling method is characterized by:
storing in advance telephone number information including the telephone number information and an identifier corresponding to the telephone number,
searching through the telephone number information stored by using the telephone number inputted,
selecting the second communication line as the communication request line if detecting a piece of the telephone number information including a telephone number which matches the telephone number inputted, and
selecting the first communication line as the communication request line if detecting no piece of the telephone number information including the telephone number which matches the telephone number inputted.

The line coupling method is characterized by:
receiving, by way of one of the first communication line and the second communication line, a commination request signal requesting a communication with one of the telephone terminal and the fax terminal,
defining one of the first communication line and the second communication line which has received the communication request signal as a communication request line,
selecting one of the telephone terminal and the fax terminal as a communication request terminal based upon the communication request signal received, and
coupling the commination request terminal selected and the communication request line.

### Brief Description of Drawings

Fig. 1 is a diagram illustrating an example of the configuration of an adapter according to this embodiment.
Fig. 2 is a flowchart illustrating a process in the case that a call is sent by a telephone terminal connected with the adapter according to this embodiment.
Fig. 3 is a flowchart illustrating a process in the case that a fax transmission request is received when a call is being carried out by the telephone terminal by way of the public line.
Fig. 4 is a diagram illustrating a coupling status of a selector in the case of transmitting/receiving a fax when a call is being carried out by the telephone terminal by way of the public line.
Fig. 5 is a flowchart illustrating a process in the case that a fax transmission request is received when a call is being carried out by the telephone terminal over an IP network.
Fig. 6 is a diagram illustrating a coupling status of the selector in the case of transmitting/receiving a fax when a call is being carried out by the telephone terminal over the IP network.
Fig. 7 is a flowchart illustrating a process in the case of transmitting a fax when a call is being carried out by the telephone terminal by way of the public line.
Fig. 8 is a flowchart illustrating a process in the case of transmitting a fax when a call is being carried out by the telephone terminal over the IP network.
Fig. 9 is a flowchart illustrating a process in the case of transmitting a fax by a FAX terminal connected with the adapter according to this embodiment.
Fig. 10 is a diagram illustrating a process in the case that a voice call request is received when the FAX terminal is engaged in communication by way of the public line.
Fig. 11 is a diagram illustrating a coupling status of the selector in the case of making a voice call when the FAX terminal is engaged in commination by way of the public line.
Fig. 12 is a flowchart illustrating a process in the case that a voice call request is received when the FAX terminal is engaged in communication over the IP network.
Fig. 13 is a diagram illustrating a coupling status of the selector in the case of receiving a voice call request when the FAX terminal is engaged in communication over the IP network.
Fig. 14 is a flowchart illustrating a process in the case of making a voice call when the FAX terminal is engaged in communication by way of the public line.
Fig. 15 is a flowchart illustrating a process in the case of making a voice call when the FAX terminal is engaged in communication over the IP network.
Fig. 16 is a diagram illustrating an example of the configuration of a conventional adapter.

### Best Mode for Carrying Out the Invention

### Embodiment 1.

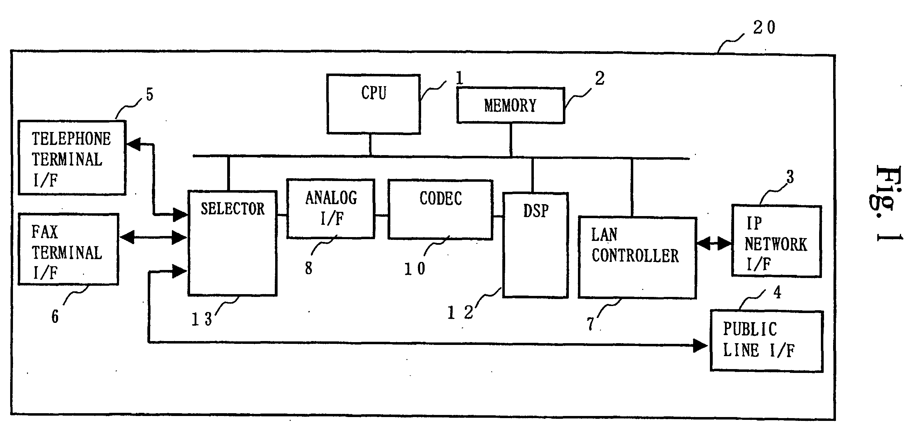

Fig. 1 illustrates an example of the configuration of an adapter 20 according to the present invention.

A reference numeral 1 denotes a controller (CPU).

A reference numeral 2 denotes a memory, which stores such as an operating system and programs.

A reference numeral 3 denotes an IP network I/F (a second communication line interface), which connects an IP network to the adapter 20.

A reference numeral 4 denotes a public line I/F (a first communication line interface), which connects a general public line to the adapter 20.

A reference numeral 5 denotes a telephone terminal interface (a telephone terminal I/F), which connects a general telephone terminal with the adapter 20.

A reference numeral 6 denotes a FAX terminal interface (a FAX terminal I/F), which connects a general fax (FAX) terminal with the adapter 20.

A reference numeral 7 denotes a LAN controller, which controls the input/output of data over the IP network via the IP network I/F 3.

A reference numeral 8 denotes an analog I/F, which generates a RING by the telephone terminal I/F 5 or the FAX terminal I/F 6, establishes a call by a terminal, monitors a response to a reception, and the like.

A reference numeral 10 denotes a codec, which is provided with an A/D converter for converting an analog voice signal from the analog I/F 8 into a digital signal and a D/A converter for converting digital data into analog data to be outputted to the analog I/F 8.

A reference numeral 12 denotes a digital signal controller (DSP), which performs signal processing such as modulation and demodulation for voice signal digital data which is inputted/outputted through the codec 10.

A reference numeral 13 denotes a selector, which couples the telephone terminal I/F 5 or the FAX terminal I/F 6 and either the analog I/F 8 or the public line I/F 4.

The selector 13 is controlled by the controller (CPU) 1.

The adapter 20 is connected with the telephone terminal for transmitting/receiving voice data and with the FAX terminal for transmitting/receiving image data. Furthermore, the adapter 20 is connected with the first communication line interface for connecting with the first communication line which is designed for a communication based on a telephone number and the second communication line interface for connecting with the second communication line which is designed for a communication based on an identifier indicating a communication network addresses for identifying a destination.

According to this embodiment, a description will be made with a public line as an example of the first communication line and an internet protocol network as an example of the second communication.

Accordingly, the description will be made with the public line I/F 4 as the first communication line interface and the IP network I/F 3 as the second communication line interface as an example.

However, the first line is not limited to the example mentioned above but may be any communication line which is designed for a communication based on a telephone number. For that reason, the first line may alternatively be a special line provided by a private company or the like.

The second communication line may be any communication line which is designed for a communication based on an identifier indicating a communication network addresses for identifying a destination.

An outline of the transmitting operation and the receiving operation of the adapter 20 will be discussed below.

In the case of transmitting from the adapter 20, the adapter 20 receives a telephone number specifying a destination inputted from either one of the telephone terminal and the FAX terminal.

The controller 1 selects, based upon the inputted telephone number, either one of the public line I/F (the first communication line interface) 4 and the IP network I/F (the second communication line interface) 3 as a communication request line interface.

The selector 13 selects the telephone terminal I/F 5 as the communication request terminal interface in the case of receiving the telephone number inputted from the telephone terminal. The selector 13, in the case of receiving the telephone number inputted from the FAX terminal, selects the FAX terminal I/F 6 as the communication request terminal interface. Then, the selector 13 couples the communication request terminal interface selected and the communication request line interface selected by the controller 1. Thus, the communication may be implemented.

In the case of the adapter 20 receiving a communication request signal requesting a communication from outside will be discussed.

The adapter 20 receives the commination request signal requesting a communication with either one of the telephone terminal and the FAX terminal either by way of the public line I/F 4 or over the IP network I/F 3.

One of the public line I/F 4 and the IP network I/F 3 by way of which the communication request signal is received is selected to be the communication request line interface.

The communication request line interface, based upon the received communication request signal, selects either one of the telephone terminal I/F 5 and the FAX terminal I/F 6 as the communication request terminal interface.

The selector 13 couples the selected commination request terminal interface and the communication request line interface. Thus, the communication may be implemented.

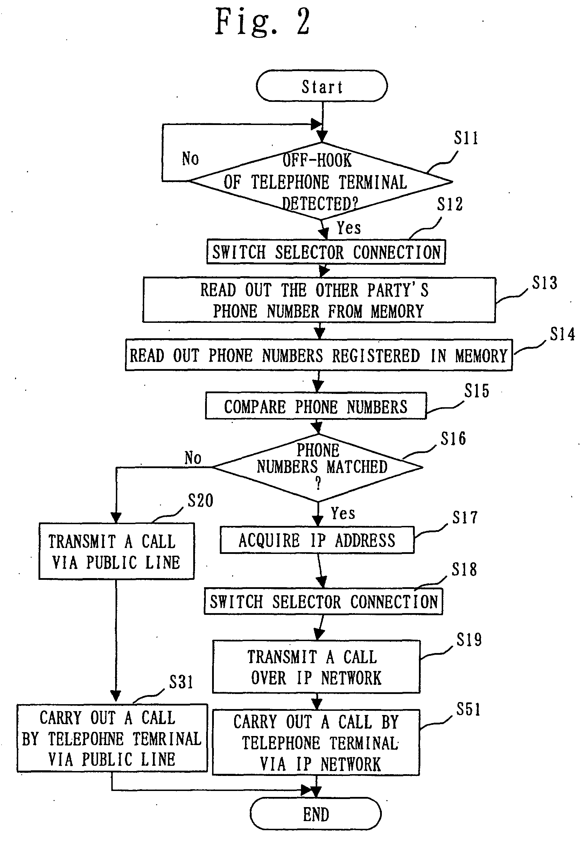

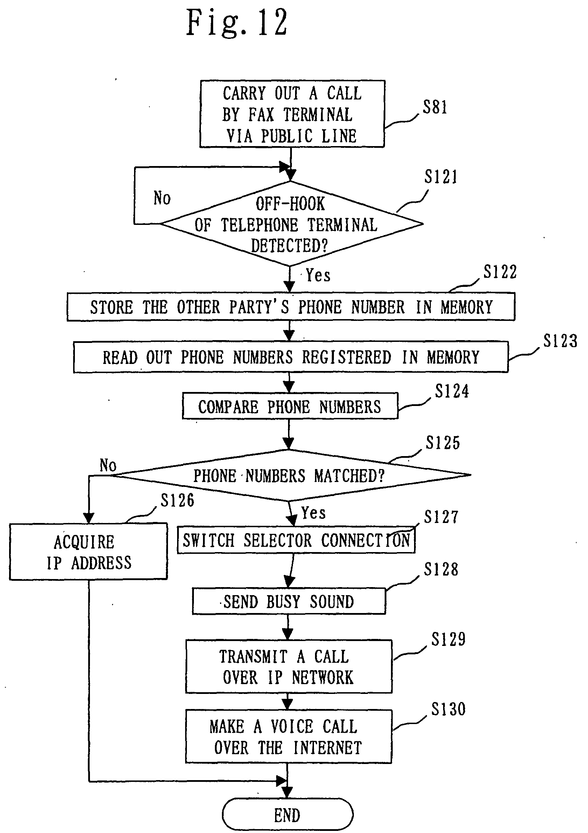

An operation of the adapter 20 according to this embodiment will be discussed below with reference to Fig. 2 to Fig. 15.

A description will be made with reference to Fig. 2 in the case that the telephone terminal connected with the telephone terminal I/F 5 sets up and carries out a call.

An off-hook state of the telephone terminal is monitored in the beginning, and it is detected that the receiver of the telephone terminal has been picked up (S11).

After detecting the off-hook state of the telephone terminal, the selector 13 (S12) is operated so as to couple the telephone terminal I/F 5 and the public line I/F 4.

Subsequently, the telephone terminal calls the telephone number of the other party, and then the called telephone number by the telephone terminal is inputted to the memory 2 (S13), and compared (S15) with previously registered telephone numbers stored in the memory 2 (S14).

The registered telephone numbers stored in the memory 2 are callable via a LAN.

As a result of comparing, if the called telephone number matches none of the telephone numbers registered in the memory 2 (No in S16), then a call is set up and carried out by way of the public line (S20), as the telephone terminal is coupled to the public line by the selector 13. Thus, the telephone call may be implemented by way of the public line (S31).

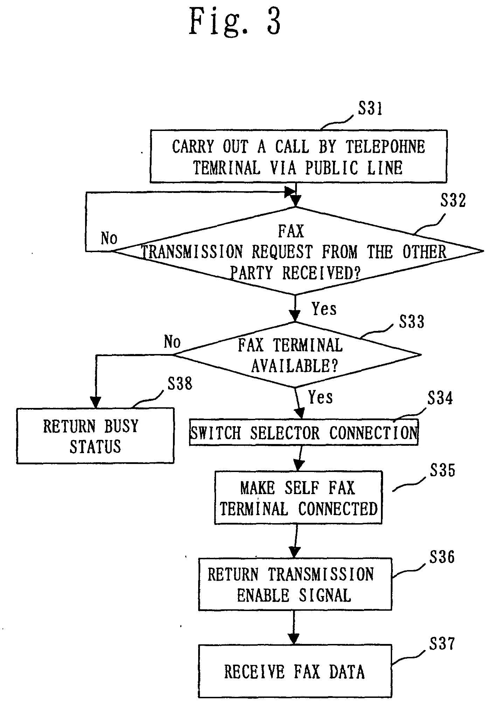

Now, a description will be made with reference to Fig. 3 in the case that the adapter receives a communication request signal requesting a communication with the FAX terminal during a call being carried out by way of the public line like the example above.

During a call being carried out by way of the public line by the telephone terminal (S31), in the case that a fax transmission request is sent from another party's adapter over the IP network (Yes in S32), an on-hook state of the FAX terminal is detected in the beginning, and it is confirmed that the FAX terminal connected with the FAX terminal I/F 6 of the adapter 20 is not in use (S33).

In the case that the FAX is in use in the off-hook state (No in S33), a busy status is returned to the other party's adapter for informing that the FAX terminal is not available at the moment. Then, the other party's adapter sends a voice signal indicating that the line is busy to a FAX terminal connected to the other party's adapter, and terminates the operation (S38).

In the case that the FAX is not in use in the on-hook state (Yes in S33), then the FAX terminal I/F 6 is coupled to the analog I/F 8 by the selector 13 (S34) in the first place. Then, a RING is sent to the FAX terminal, which allows the FAX terminal to be connected (S35).

After the FAX terminal is thus connected, a transmission enable signal is sent to the other party's adapter (S36).

Thereafter, data transmitted from the other party's adapter over the IP network is received from the IP network I/F 3. The data is obtained as fax data via the LAN controller 7. This digital data is converted through the DSP12, then converted back into analog data in the codec 10, and then sent to the FAX terminal connected with the FAX terminal I/F 6 via the analog I/F 8. Thus, the reception of the fax data may be implemented (S37).

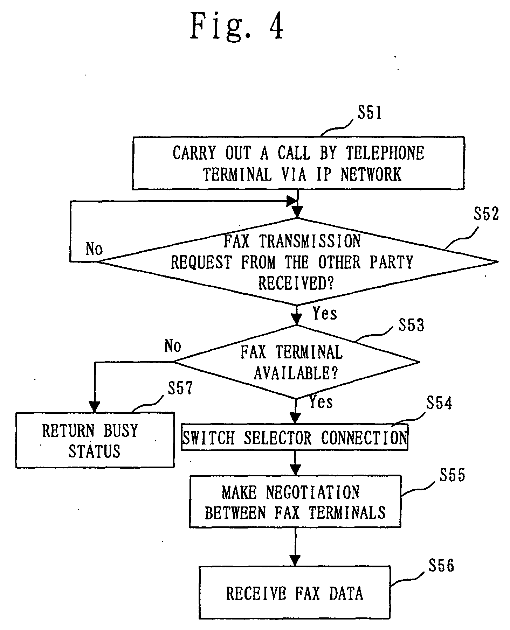

Fig. 4 illustrates a coupling status of the selector 13 in the above case.

Thus, through the above process, the fax may be received over the IP network during a call being carried out by the telephone terminal by way of the public line (S31).

Furthermore, if a call request is sent from another party's adapter during a call being carried out by the telephone terminal by way of the public line (S31), a busy status is returned to the other party's adapter for informing that the telephone terminal is engaged, as the telephone terminal of the adapter 20 is in use. Then, the other party's adapter sends a voice signal indicating the busy status to a telephone terminal connected to the other party's adapter, and terminates the operation.

Now, a description will be made with reference to Fig. 2 in the case that the called telephone number (a call by the telephone terminal over the IP network) matches a telephone number registered in the memory 2 (Yes in S16).

In the case that a call is set up and carried out by the telephone terminal over the IP network (Yes in S16), the same procedure as that discussed above for a call by the telephone terminal by way of the public line is applied to the case until the called telephone number is compared (S11 to S15). Then, if the called telephone number is callable via a LAN, and in other words, if the called telephone number matches a telephone number registered in the memory 2 (Yes in S16), the communication may be implemented.

In the first place, the selector 13 is operated so as to couple the analog I/F 8 and the telephone terminal I/F 5 (S18).

Thereafter, in order to implement a call over the IP network connected with the IP network I/F 3, the LAN controller 7 is controlled to establish a communication (S19).

The memory 2 stores registered IP addresses corresponding to telephone numbers (S17). A communication is established between the adapter 20 and another adapter 20 provided at the other party's IP address.

Hereafter, a call request is sent from the adapter 20 to the other party's adapter (S19).

Upon reception of the call request, the other party's adapter detects the on-hook state of the telephone terminal, and confirms that a telephone terminal connected with the telephone terminal I/F 5 of the other party's adapter is not engaged. Then, the other party's adapter controls the analog I/F 8 to send a RING to the telephone terminal to call the telethon terminal.

The other party's adapter, when detecting that the receiver of the other party's telephone terminal has been picked up upon reception of an off-hook signal, notifies the adapter 20 of its call enable state. Thus, the call enable state may be established (S51).

Thereafter, a voice signal from the telephone terminal connected with the adapter 20 is subject to 2-line/4-line conversion in the analog I/F 8, digitized in the codec 10, processed through signal processing such as compression in the DSP 12, and then sent to the other party's adapter from the LAN controller 7 over the IP network.

In the other party's adapter, the digital data is demodulated into analog voice in reverse fashion to that discussed above, and the voice is generated through the telephone terminal.

The transmission and the reception of voice are processed one by one, which implements a two-way communication.

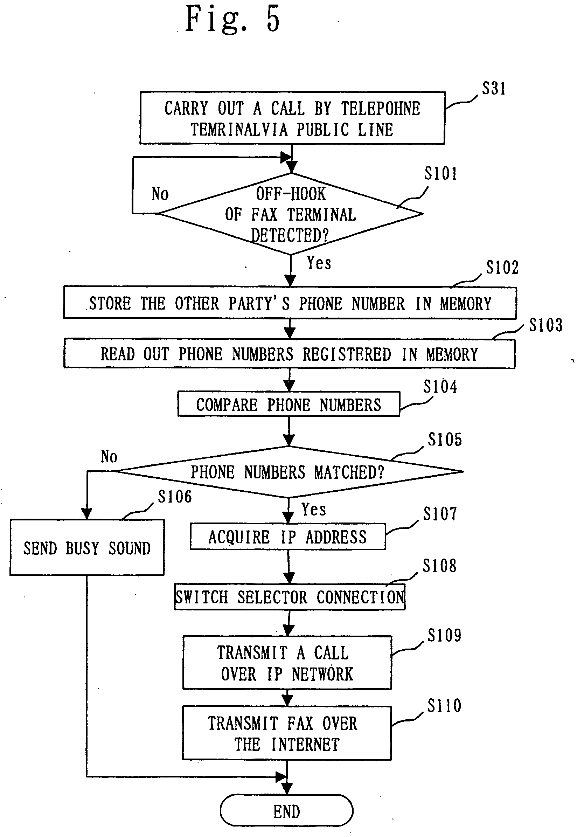

Now, a description will be made with reference to Fig. 5 in the case that the adapter receives a communication request signal requesting a communication with the FAX terminal during a call being carried out over the IP network by the telephone terminal like the example discussed above.

During a call being carried out by the telephone terminal over the IP network (S51), in the case that a fax transmission request is sent by way of the public line (S52), an on-hook state of the FAX terminal connected with the FAX terminal I/F 6 of the adapter 20 is detected in the first place, and it is confirmed that the FAX terminal is not in use (S53).

If the FAX terminal is in use in the off-hook state (No in S53), the adapter sends a voice signal indicating the engaged status, and terminates the processing (S57).

In the case of the FAX available in the on-hook state (Yes in S53), then the FAX terminal I/F 6 is coupled to the public line I/F 4 by the selector 13 in the beginning (S54).

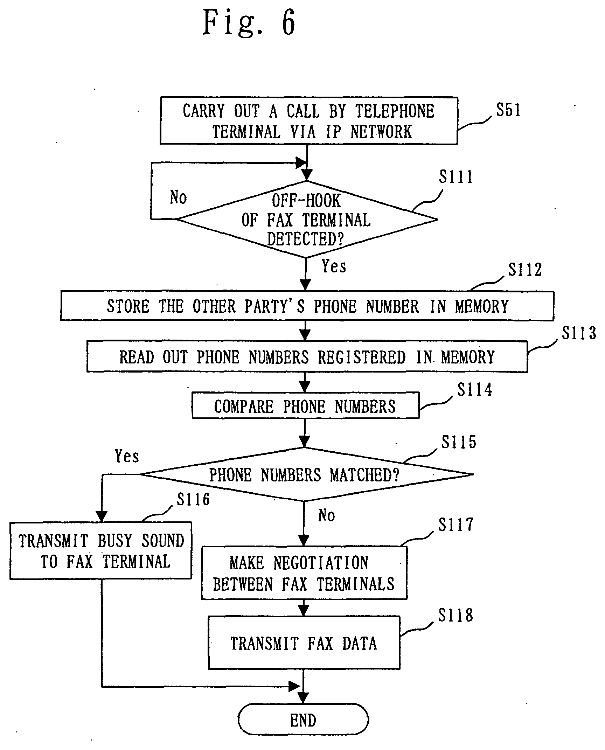

Thereafter, a negotiation is made between the other party's FAX terminal and the FAX terminal connected with the FAX terminal I/F 6 (S55). and then fax data may be received (S56). Fig. 6 illustrates a coupling status of the selector 13 in this case.

Thus, through the above process, the fax may be received by way of the public line during a call being carried out by the telephone terminal over the IP network.

In the case that a call request is sent from another party's adapter over the IP network during the call being carried out by the telephone terminal over the IP network (S51), as the telephone terminal of the adapter 20 is engaged, the adapter returns a busy status to the other party's adapter informing that the telephone terminal is busy at the moment. Then, the other party's adapter sends a voice signal indicating the engaged status to a telephone terminal connected with the other party's adapter, and terminates the process.

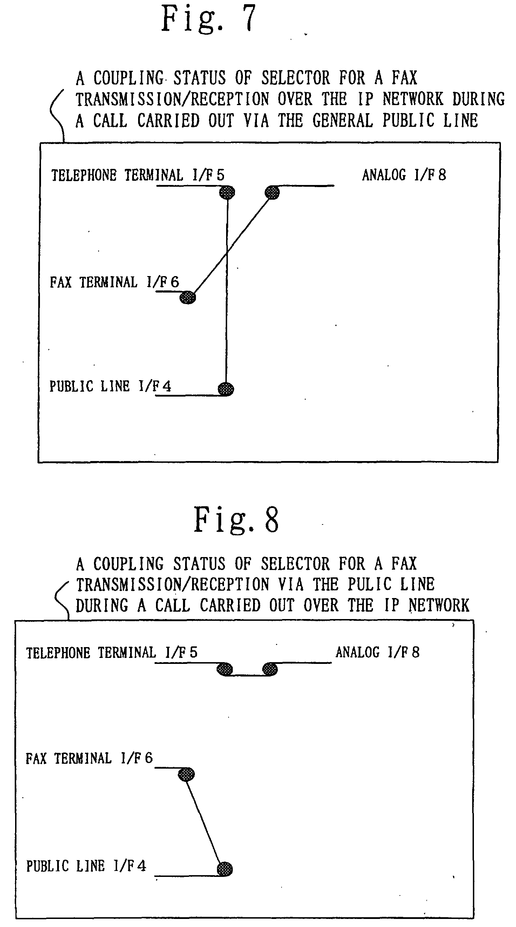

A description will be made with reference to Fig.7 in the case that a transmission is made by the FAX terminal connected with the source adapter during a call being carried out by the telephone terminal by way of the public line (S31).

In the beginning, an off-hook state is monitored, and it is detected that a fax is going to be transmitted by the FAX terminal (S101).

Then, the FAX terminal calls the telephone number of the other party, and then the called telephone number by the FAX terminal (S102) and telephone numbers registered in advance in the memory 2 (S103) are compared (S104). The registered telephone numbers stored in the memory 2 are callable via a LAN.

As a result of comparing, if none of the telephone numbers registered in the memory 2 matches the called telephone number (No in S105), then the adapter sends the FAX terminal a voice signal indicating the engaged status (S106), and terminates the process.

To the contrary, if the called telephone number matches a registered telephone number stored in the memory 2 (Yes in S105) as a result of comparing, the selector 13 is operated so as to couple the FAX terminal I/F 6 and the analog I/F 8 (S108).

Thereafter, in order to implement the fax transmission over the IP network connected with the IP network I/F 3, the adapter controls the LAN controller 7 to establish a communication (S109).

The memory 2 stores registered IP addresses corresponding to telephone numbers (S107). A communication is established with another adapter 20 provided at the other party's IP address (S109). Thus, the fax transmission may be implemented (S110).

A description will be made with reference to Fig. 8 in the case that a transmission is executed from the FAX terminal connected with the adapter (S51) during a call being carried out by the telephone terminal over the IP network.

An off-hook state is monitored in the beginning, and it is detected that a fax is going to be transmitted from the FAX terminal (S111).

Then, the other party's telephone number is called by the FAX terminal. The called telephone number by the FAX terminal (S112) and telephone numbers registered in advance in the memory 2 (S113) are compared (S114). As a result of comparing, if the called telephone number matches a telephone number registered in the memory 2 (Yes in S115), then the adapter sends a voice signal indicating the engaged status to the FAX terminal (S116), and terminates the process.

To the contrary, if none of the telephone numbers registered in the memory 2 matches the called telephone number (No in S115), then the fax transmission may be implemented by way of the public line (S117, S118).

In the case of receiving a fax when the telephone terminal is not engaged (when both the public line and the IP network are not in use or available), a fax from the other party may be received through the same procedure as that of S52 to S57 of Fig. 4.

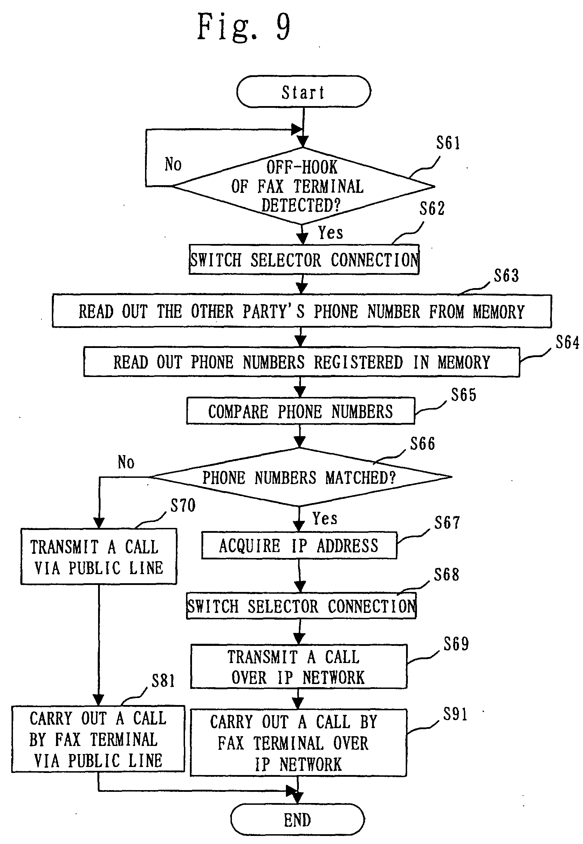

Now, an operation for transmitting a fax from the FAX terminal will be discussed with reference to Fig. 9.

In the case of calling and transmitting a fax from the FAX terminal connected with the FAX terminal I/F 6, an off-hook state (S61) is monitored in the first place, and it is detected that a fax is going to be transmitted from the FAX terminal.

After the off-hook of the FAX terminal is detected, the selector 13 is operated (S62) so as to couple the FAX terminal I/F 6 and the public line I/F 4.

Subsequently, the telephone number of the other party is called by the FAX terminal, and then the called telephone number by the FAX terminal is stored in the memory 2 (S63), and compared (S65) with telephone numbers registered in advance in the memory 2 (S64).

The telephone numbers registered in the memory 2 are callable via a LAN.

As a result of comparing, if none of the telephone numbers registered in the memory 2 matches the called telephone number (No in S66), as the telephone terminal is coupled to the public line by the selector 13, a call is set up and carried out by way of the public line (S70). Thus, the fax transmission may be implemented by way of the public line (S81).

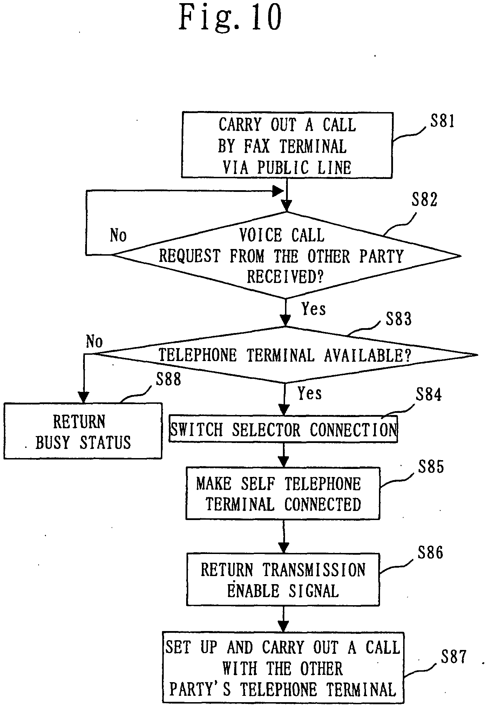

A description will be made with reference to Fig. 10 in the case of receiving a communication request signal requesting a communication with the telephone terminal during the fax transmission being carried out by the FAX terminal by way of the public line like the example discussed above.

During a fax transmission being carried out by the FAX terminal by way of the public line (S81), in the case that a voice call request is sent from another party's adapter over the IP network (Yes in S82), an on-hook state is monitored in the first place, and it is confirmed that the telephone terminal connected with the telephone terminal I/F 5 of the adapter 20 is not in use (S83).

In the case that the telephone terminal is off-hook and unavailable (No in S83), the adapter returns a busy status to the other party's adapter informing that the telephone terminal is in use. Then, the other party's adapter sends a voice signal indicating the busy status to a telephone terminal connected thereto, and terminates the process (S88).

If the telephone terminal is on-hook and available (Yes in S83), the telephone terminal I/F 5 is coupled in the first place to the analog I/F 8 by the selector 13 (S84). Then, the adapter sends a RING to the telephone terminal so as to connect the telephone terminal (S85).

After the telephone terminal is connected, the adapter sends a call enable signal to the other party's adapter (S86).

Thereafter, a two-way communication is implemented with a telephone terminal connected with the other party's adapter (S87).

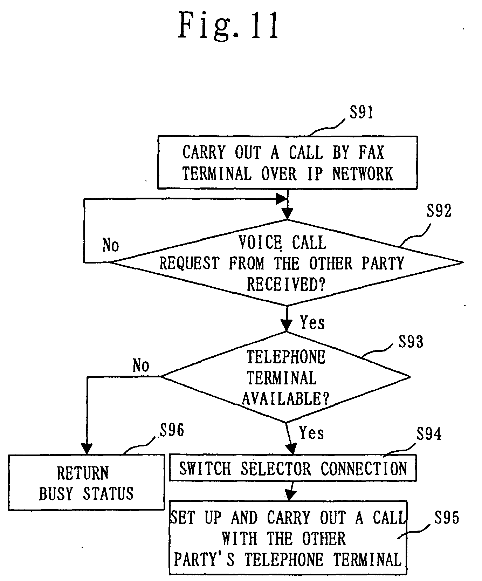

Fig. 11 shows a coupling status of the selector 13 in this case.

Thus, through the above process, a voice call may be implemented over the IP network during a fax transmission being carried out by the FAX terminal by way of the public line.

In the case that a fax transmission request is sent from another party's adapter during a fax transmission being carried out by way of the public line by the FAX terminal (S81), as the FAX terminal of the adapter 20 is engaged, the adapter returns the busy status to the other party's adapter informing that the FAX terminal is busy. Then, the other party's adapter sends a voice signal indicating the busy state to a FAX terminal connected to the other party's adapter, and terminates the process.

Now, a description will be made with reference to Fig. 9 in the case that a fax transmission is carried out by a FAX terminal over the IP network when the called telephone number matches a telephone number registered in the memory 2 (Yes in S66).

In the case of transmitting a fax from the FAX terminal over the IP network (Yes in S66), the same procedure as that discussed above of transmitting a fax by the FAX terminal by way of the public line (S61 to S65) may be applied to the case until the called telephone number is compared. Then, if the called telephone number is callable via a LAN, and in other words, if the called telephone number matches a telephone number registered in the memory 2 (Yes in S66), then the fax transmission is implemented.

In the beginning, the selector 13 is operated so as to couple the FAX terminal I/F 6 and the analog I/F 8 (S68).

Thereafter, in order to implement a fax transmission over the IP network connected with the IP network I/F 3, the adapter controls the LAN controller 7 to establish a communication (S69).

The memory 2 stores registered IP addresses corresponding to telephone numbers (S67). A communication is established with another adapter provided at the other party's IP address.

Hereafter, a call request is sent from the adapter 20 to the other party's adapter (S69).

The other party's adapter, upon reception of the call request, confirms by the on-hook state that a FAX terminal connected with the FAX terminal I/F 6 of the other party's adapter is not in use. Then, the other party's adapter controls the analog I/F 8 to send a RING to the FAX terminal to call the FAX terminal.

The other party's adapter, upon detection of the off-hook signal of the other party's FAX terminal, notifies the adapter 20 of the call enable state. Thus the fax transmission enable state may be established (S91).

Thereafter, a voice data signal from the FAX terminal connected with the adapter 20 is subject to 2-line/4-line conversion in the analog I/F 8, digitized in the codec 10, processed through signal processing such as compression in the DSP 12, and then sent to the other party's adapter from the LAN controller 7 over the IP network.

In the other party's adapter, the digital data is demodulated to an analog voice signal in reverse fashion to that mentioned above, and sent to the FAX terminal as voice data.

The transmission and the reception of voice data are processed one by one, which implements a two-way communication.

A description will be made with reference to Fig. 11 in the case of receiving a communication request signal requesting a communication with the telephone terminal during the fax transmission by the FAX terminal over the IP network like the example discussed above.

During a fax transmission being carried out by the FAX terminal over the IP network (S91), in the case that a voice call request is sent by way of the public line (S92), an on-hook (S93) in the first place, and it is confirmed that the telephone terminal connected to the telephone terminal I/F 5 of the adapter 20 is not in use.

If the telephone terminal is off-hook and in use (No in S93), the adapter sends a voice signal indicating the engaged state, and terminates the process (S96).

If the telephone terminal is on-hook and not in use (Yes in S93), then the telephone terminal I/F 5 is coupled to the public line I/F 4 by the selector 13 (S94) in the beginning.

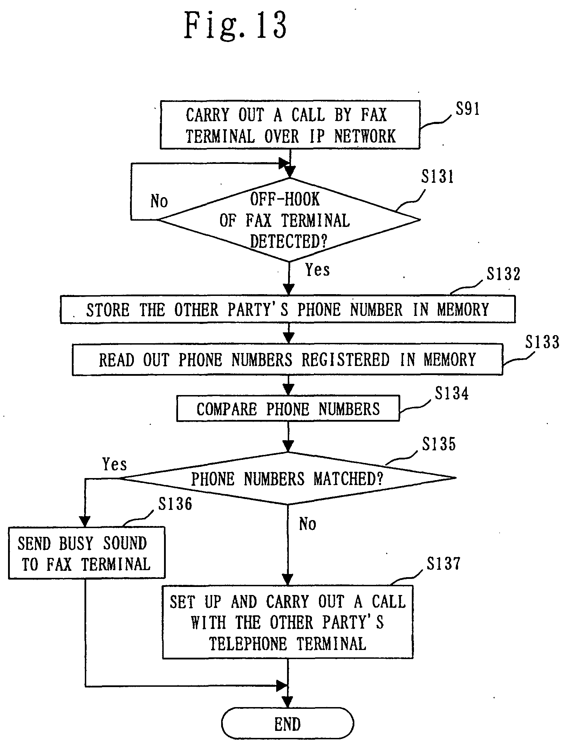

Thereafter, a two-way communication is made between the telephone terminal connected with the telephone terminal I/F 5 and the other party's telephone terminal (S95). Fig. 13 shows a coupling status of the selector 13 in this case.

Thus, through the above processing, the voice call may be implemented by way of the public line during a fax transmission/reception being carried out by the FAX terminal over the IP network.

In the case of receiving a fax transmission request sent from the other party's adapter over the IP network during this fax transmission/reception being carried out by the FAX terminal over the IP network (S91), as the FAX terminal of the adapter 20 is engaged, the adapter 20 returns the busy status to the other party's adapter informing of the engaged state. Then, the other party's adapter sends a voice signal indicating the engaged state to a FAX terminal connected to the other party's adapter, and terminates the process.

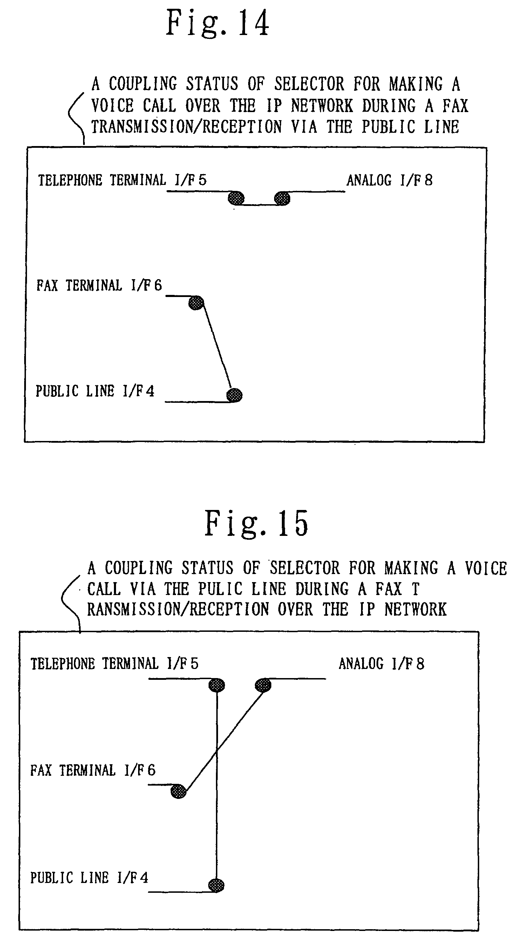

A description will be made with reference to Fig. 14 in the case of starting a voice call connected with the adapter during a fax transmission being carried out by the FAX terminal by way of the public line (S81).

In the first place, an off-hook state is monitored, and it is detected that a voice call is going to be started from the telephone terminal (S121).

Subsequently, the other party's telephone number is called by the telephone terminal, and then the called telephone number by the telephone terminal (S122) and telephone numbers registered in advance in the memory 2 (S123) are compared (S124). The telephone numbers registered in the memory 2 are callable via a LAN.

As a result of comparing, if the called telephone number matches none of the telephone numbers registered in the memory 2 (No in S125), then the adapter sends a voice signal indicating the busy state to the telephone terminal (S126), and terminates the process.

To the contrary, if the called telephone number matches a telephone number registered in the memory 2 (Yes in S125) as a result of comparing, then the selector 13 is operated so as to couple the telephone terminal I/F 5 and the analog I/F 8 (S128).

Thereafter, the adapter controls the LAN controller 7, in order to implement the voice call over the IP network connected to the IP network I/F 3, to establish a communication (S129).

The memory 2 stores registered IP addresses corresponding to telephone numbers (S127). A communication is established with another adapter 20 provided at the other party's IP address (S129). Thus, the voice call may be implemented (S130).

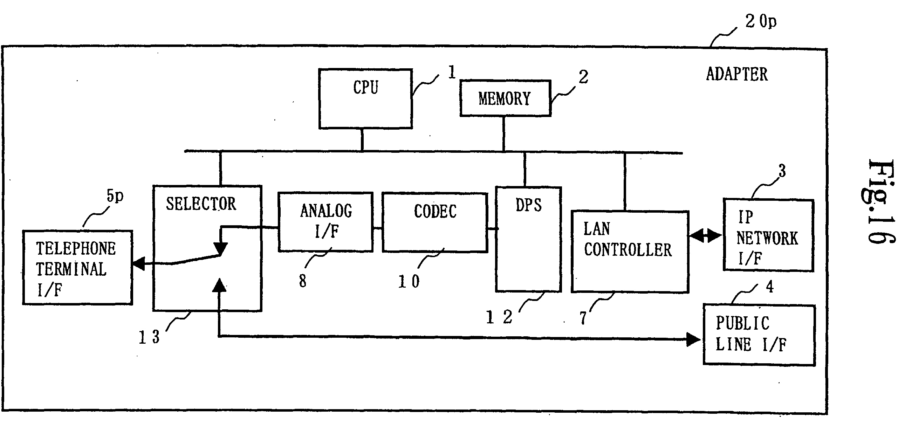

A description will be made with reference to Fig. 15 in the case that a transmission is made from the telephone terminal connected to the adapter (S91) during a fax transmission being carried out by the FAX terminal over the IP network.

An off-hook state is monitored in the beginning, and it is detected that a voice call is going to be carried out from the telephone terminal (S131).

Then, the telephone terminal calls the other party's telephone number. The called telephone number by the telephone terminal (S132) and telephone numbers registered in the memory 2 (S133) are compared (S114). As a result of comparing, if the called telephone number matches a telephone number registered in the memory 2 (Yes in S135), then the adapter sends a voice signal indicating the busy state to the telephone terminal (S136), and terminates the process.

To the contrary, if the called telephone number matches none of the telephone numbers registered in the memory 2 as a result of comparing (No in S135), then the voice call is implemented by way of the public line (S137).

Furthermore, in the case of receiving a voice call when the FAX terminal is not transmitting a fax (when both the public line and the IP network are not in use or available), the voice call may be received from the other party through the same procedure as that of S82 to S88 of Fig. 10 or that of S92 to S96 of Fig. 11.

### Industrial Applicability

According to the present invention, the FAX terminal may be used for a communication while the telephone terminal is being engaged in communication by way of the public line.

According to the present invention, the telephone terminal may be used for a communication while the FAX terminal is being engaged in communication by way of the public line.

According to the present invention, the FAX terminal may be used for a communication while the telephone terminal is being engaged in communication over the IP network.

According to the present invention, the telephone terminal may used for a communication while the FAX terminal is being engaged in communication over the IP network.

## Claims

1. An adapter connected with a telephone terminal for transmitting/receiving voice data and a fax terminal for transmitting/receiving image data, the adapter comprising:
a first communication line interface which connects with a first communication line designed for a communication based upon a telephone number;
a second communication line interface which connects with a second communication line designed for a communication based upon an identifier, which indicates a communication network address, for identifying a destination;
a telephone terminal interface which connects with the telephone terminal;
a fax terminal interface which connects with the fax terminal;
a selector which couples one of the first communication line interface and the second communication line interface and one of the telephone terminal interface and the fax terminal interface; and
a controller for controlling the selector.

2. The adapter according to Claim 1,
wherein the adapter receives the telephone number specifying a destination inputted from one of the telephone terminal and the fax terminal,
wherein the controller selects, based upon the telephone number inputted, one of the first communication line interface and the second communication line interface as a communication request line interface, and
wherein the selector selects the telephone terminal interface as a communication request terminal interface in a case that the telephone number is inputted by the telephone terminal, and selects the fax terminal interface as the communication request terminal interface in a case that the telephone number is inputted by the fax terminal, and then couples the communication request terminal interface selected and the communication request line interface selected by the controller.

3. The adapter according to claim 2, further comprising a memory for storing telephone number information including the telephone number and an identifier corresponding to the telephone number;
wherein the controller searches through the telephone number information stored in the memory by using the telephone number inputted, and then selects the second communication line interface as the communication request line interface if detecting a piece of the telephone number information including a telephone number which matches the telephone number inputted, and selects the first communication line interface as the communication request line interface if detecting no piece of the telephone number information including the telephone number which matches the telephone number inputted.

4. The adapter according to claim 1,
wherein the adapter receives a communication request signal requesting a communication with one of the telephone terminal and the fax terminal by way of one of the first communication line interface and the second communication line interface, and defines one of the first communication line interface and the second communication line interface which has received the communication request signal as a communication request line interface,
wherein the communication request line interface selects, based upon the communication request signal received, one of the telephone terminal interface and the fax terminal interface as a communication request terminal interface, and
wherein the selector couples the communication request terminal interface selected and the communication request line interface.

5. The adapter according to claim 2 or 4,
wherein the second communication line interface, in a case of receiving the communication request signal requesting a communication with the telephone terminal while the first communication line interface and the telephone terminal interface are coupled by the selector, transmits a reply indicating that the telephone terminal is engaged in communication to a transmitting source of the communication request signal,
wherein the second communication line interface, in a case of receiving the communication request signal requesting a communication with the fax terminal while the first communication line interface and the telephone terminal interface are coupled by the selector, selects the second commination line interface as the communication request terminal interface and selects the fax terminal interface as the communication request line interface, and
wherein the selector couples the communication request terminal interface selected and the communication request line interface selected.

6. The adapter according to claim 2 or 4,
wherein the second communication line interface, in a case of receiving the communication request signal requesting a communication with the fax terminal while the first communication line interface and the fax terminal interface are coupled by the selector, transmits a reply indicating that the fax terminal is engaged in communication to a transmission source of the communication request signal,
wherein the second communication line interface, in a case of receiving the communication request signal requesting a communication with the telephone terminal while the first communication line interface and the fax terminal interface are coupled by the selector, selects the second communication line interface as the communication request terminal interface and selects the telephone terminal interface as the communication request line interface, and
wherein the selector couples the communication request terminal interface selected and the communication request line interface selected.

7. The adapter according to claim 2 or 4,
wherein the first communication line interface, in a case of receiving the communication request signal requesting a communication with the telephone terminal while the second communication line interface and the telephone terminal interface are coupled by the selector, transmits a reply indicating that the telephone terminal is engaged in communication to a transmission source of the communication request signal,
wherein the first communication line interface, in a case of receiving the communication request signal requesting a communication with the fax terminal while the second communication line interface and the telephone terminal interface are coupled by the selector, selects the first commination line interface as the communication request terminal interface and selects the fax terminal interface as the communication request line interface, and
wherein the selector couples the selected communication request terminal interface and the communication request line interface selected.

8. The adapter according to claim 2 or 4,
wherein the first communication line interface, in a case of receiving the communication request signal requesting a communication with the fax terminal while the second communication line interface and the fax terminal interface are coupled by the selector, transmits a reply indicating that the fax terminal is engaged in communication to a transmission source of the communication request signal,
wherein the first communication line interface, in a case of receiving the communication request signal requesting a communication with the telephone terminal the second communication line interface and the fax terminal interface are coupled by the selector, selects the first commination line interface as the communication request terminal interface and selects the telephone terminal interface as the communication request line interface, and
wherein the selector couples the communication request terminal interface selected and the communication request line interface selected.

9. The adapter according to claim 4, further comprising a memory for storing telephone number information including the telephone number and an identifier corresponding to the telephone number.

10. The adapter according to claim 3 or 9,
wherein the controller searches through the telephone number information stored in the memory by using a telephone number inputted, in a case that the telephone number is inputted to the fax terminal interface by the fax terminal while the first communication line interface and the telephone terminal interface are coupled by the selector, and then notifies the fax terminal interface that the telephone terminal is engaged in communication if detecting no piece of the telephone number information including a telephone number which matches the telephone number inputted, and selects the second communication line interface as the communication request line interface and the fax terminal interface as the communication request terminal interface if detecting a piece of the telephone number information including the telephone number which matches the telephone number inputted, and
wherein the selector couples the communication request terminal interface selected and the communication request line interface selected.

11. The adapter according to claim 3 or 9,
wherein the controller searches through the telephone number information stored in the memory by using the telephone number inputted in a case that the telephone number is inputted to the telephone terminal interface by the telephone terminal while the first communication line interface and the fax terminal interface are couple by the selector, and then notifies the telephone terminal interface that the fax terminal is engaged in commination if detecting no piece of the telephone number information including a telephone number which matches the telephone number inputted, and selects the second communication line interface as the communication request line interface and the fax terminal interface as the communication request terminal interface if detecting a piece of the telephone number information including the telephone number which matches the telephone number inputted, and
wherein the selector couples the communication request terminal interface selected and the communication request line interface selected.

12. The adapter according to claim 2 or 4,
wherein the controller selects the first communication line interface as the communication request line interface and the fax terminal interface as the communication request terminal interface in a case that the telephone number is inputted to the fax terminal interface from the fax terminal while the second communication line interface and the telephone terminal interface are coupled by the selector, and
wherein the selector couples the communication request terminal interface selected and the communication request line interface selected.

13. The adapter according to claim 2 or 4,
wherein the controller selects the first communication line interface as the communication request line interface and the telephone terminal interface as the communication request terminal interface in a case that the telephone number is inputted to the telephone terminal interface by the telephone terminal while the second communication line interface and the fax terminal interface are coupled by the selector, and
wherein the selector couples the communication request terminal interface selected and the communication request line interface selected.

14. The adapter according to claim 1,
wherein the first communication line interface is connected to a public line as the first communication line, and
wherein the second communication line interface is connected to an internet protocol network as the second communication line.

15. A line coupling method for coupling one of a telephone terminal for transmitting/receiving voice data and a fax terminal for transmitting/receiving image data and one of a first communication line designed for a communication based upon a telephone number and a second communication line designed for a communication based upon an identifier which indicates a communication network address for identifying a destination, the line coupling method comprising:
coupling one of the first communication line and the second communication line and one of the telephone terminal and the fax terminal.

16. The line coupling method according to claim 15, including:
receiving the telephone number specifying a destination by one of the telephone terminal and the fax terminal;
selecting one of the first communication line and the second communication line as a communication request line based upon the telephone number inputted;
coupling the telephone terminal and the communication request line when the telephone number is inputted by the telephone terminal; and
coupling the fax terminal and the communication request line when the telephone number is inputted by the fax terminal.

17. The line coupling method according to claim 16, including:
storing in advance telephone number information including the telephone number information and an identifier corresponding to the telephone number;
searching through the telephone number information stored by using the telephone number inputted;
selecting the second communication line as the communication request line if detecting a piece of the telephone number information including a telephone number which matches the telephone number inputted; and
selecting the first communication line as the communication request line if detecting no piece of the telephone number information including the telephone number which matches the telephone number inputted.

18. The line coupling method according to claim 15, including:
receiving, by way of one of the first communication line and the second communication line, a commination request signal requesting a communication with one of the telephone terminal and the fax terminal;
defining one of the first communication line and the second communication line which has received the communication request signal as a communication request line;
selecting one of the telephone terminal and the fax terminal as a communication request terminal based upon the communication request signal received; and
coupling the commination request terminal selected and the communication request line.
